Europäisches Patentamt

European Patent Office

Office européen des brevets

(11) Publication number: **0 320 171**
**A1**

## EUROPEAN PATENT APPLICATION

(21) Application number: **88311375.5**

(22) Date of filing: **01.12.88**

(51) Int. Cl.⁴: **F16H 25/12 , F01B 3/08**

(30) Priority: **10.12.87 GB 8728928**

(43) Date of publication of application:
**14.06.89 Bulletin 89/24**

(84) Designated Contracting States:
**DE FR IT SE**

(71) Applicant: **Wilcox, Kevin**
**1 Ash Close**
**Lydney Gloucestershire(GB)**

Applicant: **Hopper, Alan Ingledew**
**Thornhill Playden**
**Nr. Rye East Sussex(GB)**

(72) Inventor: **Wilcox, Kevin**
**1 Ash Close**
**Lydney Gloucestershire(GB)**
Inventor: **Hopper, Alan Ingledew**
**Thornhill Playden**
**Nr. Rye East Sussex(GB)**

(74) Representative: **Carter, Gerald et al**
**Arthur R. Davies & Co. 27 Imperial Square**
**Cheltenham GL50 1RQ Gloucestershire(GB)**

(54) **Power transmission apparatus.**

(57) A steam, gas, or internal combustion engine includes a piston (28) reciprocable within a cylinder (30) and a rotatable output shaft (36), the piston being formed with a peripheral sinusoidal guideway (32) which cooperates with a follower (34) on the cylinder so that reciprocation of the piston is accompanied by continuous rotation thereof in one direction about the longitudinal axis of reciprocation. Coupling means (37, 39) are provided to transmit the rotation of the piston, as it reciprocates, to the output shaft. Similar apparatus may also act as a pump or compressor, in which case the shaft is an input shaft which is rotated to effect reciprocation of the piston.

FIG 4

## Power transmission apparatus

The invention relates to power transmission apparatus incorporating mechanisms for translating reciprocating motion into rotary motion and vice versa. The invention is particularly applicable to engines, pumps, compressors and the like of the kind including a piston reciprocable within a cylinder, the piston being connected to a shaft so that reciprocation of the piston within the cylinder is accompanied by rotation of the shaft. In an engine the reciprocation of the piston is converted to rotation of an output shaft, whereas in a pump or compressor rotation of an input shaft is converted to reciprocation of the piston. Conventionally, the input or output shaft is a crankshaft rotatable about an axis at right angles to the cylinder axis, the crank arm of the crankshaft being connected to the piston by a connecting rod.

While such engines, pumps and compressors have of course been very successful and have been developed to a high degree of sophistication, there are inherent disadvantages in the design. For example, the crank connection between the piston and the rotating shaft is space-consuming and it would be advantageous to have a more direct and more compact coupling of the piston to the shaft. Also, a significant proportion of the energy input is absorbed in accelerating the connecting rod and other associated parts.

The present invention sets out to provide a new form of power transmission apparatus which may overcome these disadvantages and which may also result in other significant advantages.

According to the invention there is provided power transmission apparatus, such as an engine, pump or compressor, including a piston reciprocable within a cylinder and a rotatable shaft, the piston and cylinder having relatively movable cooperating formations such that reciprocation of the piston is accompanied by continuous rotation thereof in one direction about the longitudinal axis of reciprocation, coupling means being provided to transmit the rotation of the piston to the rotatable shaft or vice versa.

In the case where the device is an engine, it may be an internal combustion engine, steam engine, gas engine or any other form of piston and cylinder engine. In this case the shaft is the output shaft.

The cooperating formations may comprise a peripheral guideway on one part, preferably the piston, and a follower on the other part, preferably the cylinder the peripheral guideway having generally the form of an alternating wave. Preferably the guideway is generally sinusoidal in form whereby reciprocation of the piston may be accompanied by rotation thereof at a substantially constant speed.

The guideway may be in the form of a groove in the surface of the piston or cylinder, the follower being located so as to project into the groove and being of such shape and dimensions as to contact both sides of the groove as relative rotation occurs between the piston and cylinder.

Preferably the follower is rotatable so as to roll along the sides of the groove. In this case the follower will normally roll along one side or other of the groove depending on the direction in which the piston is moving, and will therefore change its direction of rotation as the piston changes direction. The follower may therefore comprise two contra-rotating elements which roll along the opposite sides of the groove respectively.

In the case where the guideway extends around the piston, the guideway may have a toothed surface, the follower being a toothed wheel in mesh with the guideway surface which wheel thereby rotates as the piston rotates. In this case the follower may be coupled to the shaft to transmit the rotation of the piston to the shaft or vice versa.

Alternatively, the shaft may extend axially into the cylinder through one end thereof, and the coupling means between the piston and output shaft may be such that the shaft rotates with the piston while permitting axial movement of the piston relatively to the shaft. For example, the coupling means may comprise a splined connection.

In any of the above arrangements there may be provided a plurality of said followers spaced around the periphery of the piston.

In the case of an internal combustion, steam or gas engine, the rotation of the piston may be arranged to effect opening and closing of valve means for controlling the flow of gases into and out of the cylinder. For example, there may be rotatable with the piston a valve sleeve having apertures which open and close ports in the cylinder wall in a sequence according to the required combustion or pumping cycle. The sleeve may be fixed to the piston so as to move axially with the piston as it rotates, or it may be so connected to the piston, for example by a pin-and-slot connection, so that the piston move axially relatively to the valve sleeve. The arrangement is particularly suitable for an internal combustion engine working on the two-stroke cycle.

In any of the above arrangements there may be provided a plurality of piston and cylinder assemblies, the pistons being coupled to a common input or output shaft. For example, the common shaft may extend axially into two opposed, axially aligned cylinders.

The invention also includes within its scope an arrangement in which the piston itself does not rotate, but is directly coupled to the output or input shaft by means similar to those referred to above, whereby the shaft rotates as the piston reciprocates.

According to this aspect of the invention, therefore, there is provided an engine, pump or compressor including a piston reciprocable within a cylinder and an output or input shaft extending longitudinally into the cylinder through one end thereof, coupling means being provided between the piston and shaft such that reciprocation of the piston is accompanied by continuous rotation of the shaft in one direction, means being provided to restrain the piston against rotation relatively to the cylinder about the longitudinal axis of reciprocation. Thus, the coupling means between the piston and shaft may be similar to the guideway and follower arrangements referred to above.

Further features of the invention will be apparent from the following description of exemplary embodiments thereof, reference being made to the accompanying drawings in which:

Figure 1 is a diagrammatic perspective view showing a piston and associated output shaft for use in an engine according to the invention,

Figure 2 is a perspective view of an alternative form of piston, showing a follower arrangement,

Figure 3 is a diagrammatic perspective view of two opposed pistons showing a means for obtaining power output,

Figure 4 is a diagrammatic section through a horizontally opposed two-cylinder engine according to the invention,

Figure 5 is a diagrammatic cutaway perspective view of another form of engine,

Figure 6 is a perspective view of a modified form of piston,

Figure 7 is a diagrammatic section through another horizontally opposed two-cylinder engine,

Figure 8 is a perspective view of a piston suitable for use in the engine of Figure 7,

Figure 9 is a diagrammatic section through the cylinder of Figure 7 illustrating how the valving is controlled,

Figure 10 is a diagrammatic perspective view of parts of an alternative form of device according to the invention,

Figure 11 is a diagrammatic section through a further form of two-stroke engine according to the invention,

Figure 12 is a similar view through a still further form of engine,

Figure 13 is a perspective view illustrating the balancing arrangement used in the engines of Figures 11 and 12, and

Figure 14 is a similar view to Figure 1 of an alternative form of piston and output shaft for use in an engine according to the invention.

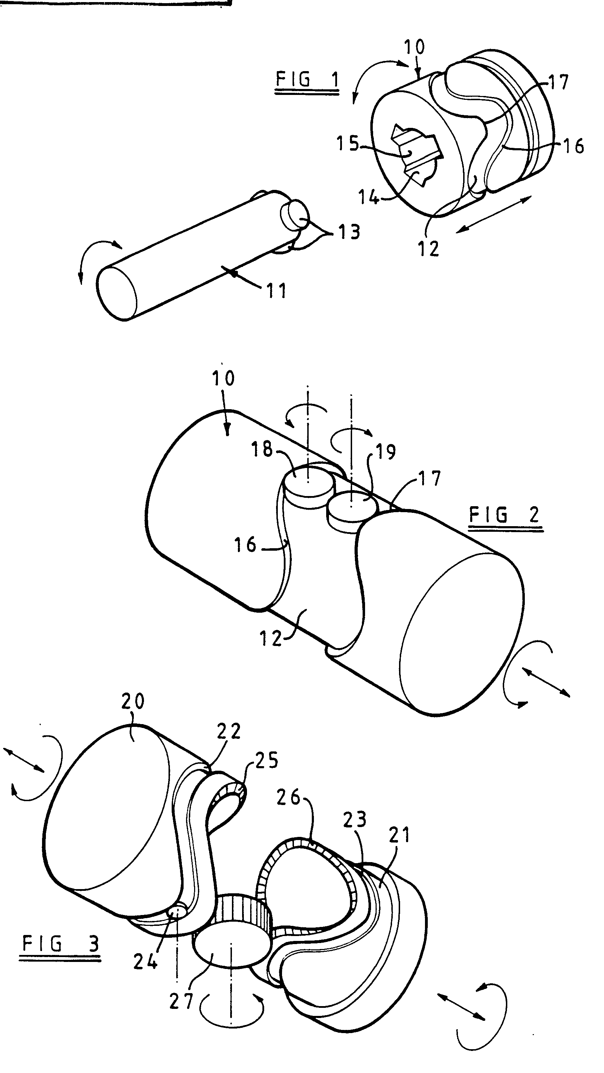

Figure 1 is a simplified view illustrating only a typical piston 10 and output shaft 11 for the purpose of describing the essential principle of the invention.

The piston 10 is formed with a peripheral groove 12 which has generally the form of a sinusoidal wave. The internal surface of the cylinder (not shown) is provided with one or more inwardly projecting followers which engage in the groove 12. The groove 12 executes three complete cycles as it extends around the periphery of the piston 10. It will thus be seen that as the piston reciprocates in the cylinder according to a two-stroke or four-stroke cycle it will be caused to rotate within the cylinder, about its longitudinal axis, by virtue of the engagement of the walls of the groove 12 with the fixed followers on the internal surface of the cylinder.

The output shaft 11 extends axially into the cylinder through one closed end thereof and is formed with circumferentially spaced follower elements 13 which engage in grooves 14 in the walls of an axial bore 15 in the piston 10. The piston 10 can thus slide axially on the output shaft 11 while the rotation of the piston is transmitted directly to the output shaft from which power can be taken off.

In order to reduce friction, the followers on the internal surface of the cylinder, and the elements 13, may comprise rotatable rollers.

In the case where each follower projecting inwardly of the cylinder comprises a single roller, it will be appreciated that the roller will run on the upper side 16 of the groove when the piston is accelerating in the direction of the output shaft 11 and on the lower side 17 of the groove when the piston is accelerating in a direction away from the shaft 11. Since the piston rotates continuously in one direction (either clockwise or anti-clockwise) each follower roller will reverse its direction of rotation on a change in the sense of acceleration of the piston during its reciprocation in the cylinder. In order to avoid this the modified arrangement of Figure 2 may be employed where each follower on the cylinder comprises two rollers 18 and 19. One roller 18 runs on the upper side wall 16 of the groove 12 and the other roller 19 runs on the lower side wall 17 of the groove. Both rollers 18 and 19 therefore rotate continuously in opposite directions regardless of the direction in which the piston is accelerating.

Since the rollers 18 and 19 are rotating continuously in the same direction, they could be used for the power take-off from the piston. In this case the side walls 16 and 17 of the groove 12 would be toothed and the rollers 18 and 19 would be in the form of toothed pinions in mesh with the side walls of the groove. Power could then be taken off from shafts on which the pinions were mounted and in this case the axial output shaft shown in Figure 1 could be dispensed with.

Figure 3 shows a modification of such an arrangement in which two opposed pistons 20 and 21 are formed with respective grooves 22 and 23 which are engaged by followers, such as 24, extending inwardly from the cylinder walls. In this case the followers serve only to impart the required rotation to the pistons as they rotate and the lower ends of the skirts of the pistons are formed with peripheral toothed tracks 25, 26 which are of sinusoidal form parallel to the grooves 22 and 23 respectively. The toothed tracks 25 and 26 are engaged by a common toothed pinion 27 which is mounted on an output shaft from which power may be taken. In this arrangement the engine is balanced since the pistons always move with equal and opposite velocities.

Figure 4 shows diagrammatically a section through an alternative form of horizontally opposed twin-cylinder engine. In this arrangement the pistons 28, 29 are reciprocable in cylinders 30, 31 respectively. As in the previously described arrangement each piston is formed with a peripheral sinusoidal groove 32, 33 which is engaged by followers 34, 35 projecting inwardly from the cylinder walls.

The two cylinders are coupled to a common output shaft 36 the opposite ends of the output shaft being provided with rollers 37, 38 which are received in axial grooves 39, 40 in axial bores in the pistons, the arrangement being such that rotation of the pistons is transmitted to the shaft 36, but axial movement of the pistons relatively to the shaft is permitted. The output shaft 36 carries an output gearwheel (or pulley wheel) 37a which drives the load.

The engine operates on the two-stroke cycle and to provide the valve operation each piston is integrally formed with an axially extending valve sleeve 41, 42. The sleeves are formed with apertures 43, 44 which cooperates with ports 45, 46 in enlarged diameter portions 47, 48 of the cylinders to control the flow of fuel/air mixture into the portions 47, 48 of the cylinders and out through a transfer passage (not shown) to the smaller cylinder portions. Ports 49, 50 in the smaller diameter portions of the cylinders are similarly controlled by movements of the pistons for controlled flow of fuel/air mixture into, and exhaust gases out of, the cylinders. The piston heads are formed with notches 51, 52 for this purpose. The manner in which the flow of gases should be controlled will be apparent to those skilled in the art of internal combustion engines and will not therefore be described in detail, along with other detailed features of such an engine, such as sparking plugs etc. This engine is again balanced since the pistons move in opposition to one another.

Use of the two-stroke cycle in an engine according to the invention can be used efficiently without the high exhaust emissions normally associated with this type of engine. Also, the very high volume of air displaced due to the increased diameter portion of the cylinder allows the engine to be supercharged.

The engine would be lubricated by two-stroke fuel mixture. However the engine could also have its own sump and oil pump for lubrication. For high efficiency engines direct fuel injection could be used. The engine layout allows any number of similar engines to be connected together with their output torque transmitted to a central output power shaft.

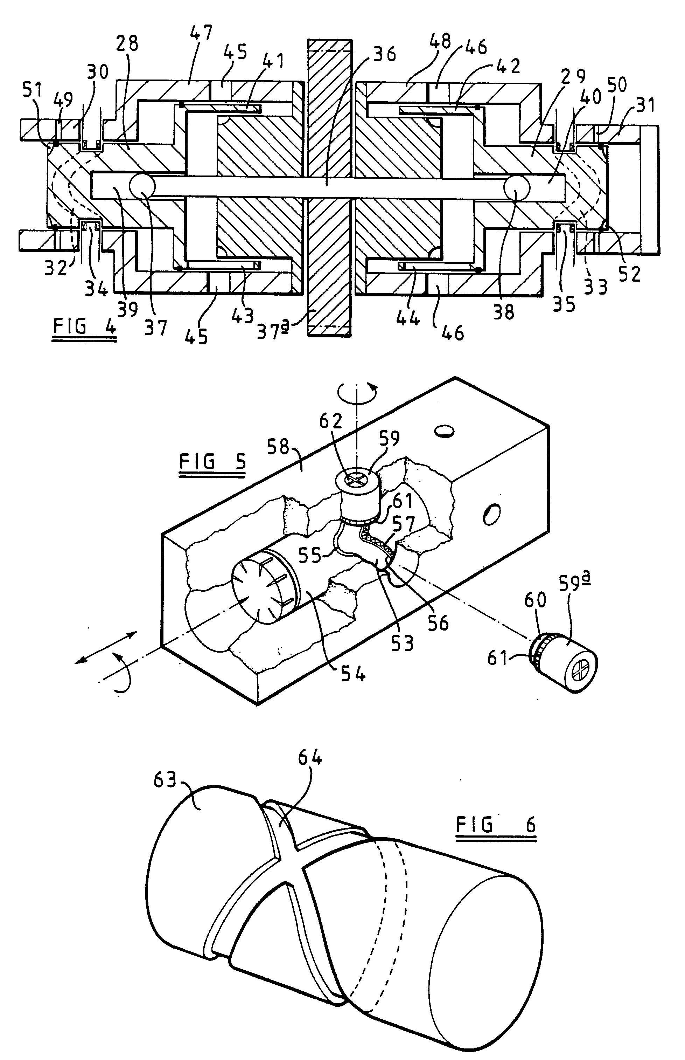

In the form of engine shown in Figure 5, the sinusoidal groove 53 around the periphery of the piston 54 is stepped in profile. The deeper, narrower portion of the profile has smooth sidewalls 55, 56 and the outer, wider portion of the groove is formed with a toothed track as indicated at 57.

Rotatable in bearings in the wall of the cylinder 58 are two or more rotatable followers 59, 59a. The end of each follower which projects into the interior of the cylinder is stepped as may best be seen in the separately illustrated follower 59a. The smaller diameter end portion 60 of the follower engages within the narrower smooth-sided portion of the peripheral groove 53 in the piston and serves to take the load which results from the reciprocation of the piston 54 and imparts rotation to the piston. The large diameter portion of each follower 59, 59a is formed with peripheral gear teeth 61 which mesh with the toothed track 57 on one side of the wider portion of the stepped groove 53 and this serves to transmit torque from the rotating piston 54 to the shaft 62 on which the follower is mounted. This then constitutes the output shaft of the engine.

It will be appreciated that a number of piston and cylinder assemblies of the kind shown in Figure 5 may be arranged within a compact space with their output shafts connected to a common central output shaft which provides the power take-off from the multi-cylinder engine. Services for the engine may be supplied by a pump arrangement bolted to one of the output drives to supply cooling water or oil circulation or to drive an electrical generator.

In the arrangements described above the peripheral groove around the piston has been described as being of sinusoidal form, but it will be appreciated that many other different wave forms may be used depending on the required movement of the piston. Figure 6 shows an arrangement where the piston 63 has a groove 64 of such a profile as to cause the piston to rotate at twice the rate at which it reciprocates. Different profiles of groove can provide almost any ratio between the rate of reciprocation and the rate of rotation. The profile shown in Figure 6 would require a form of follower capable of passing the crossover point without any tendency to change tracks.

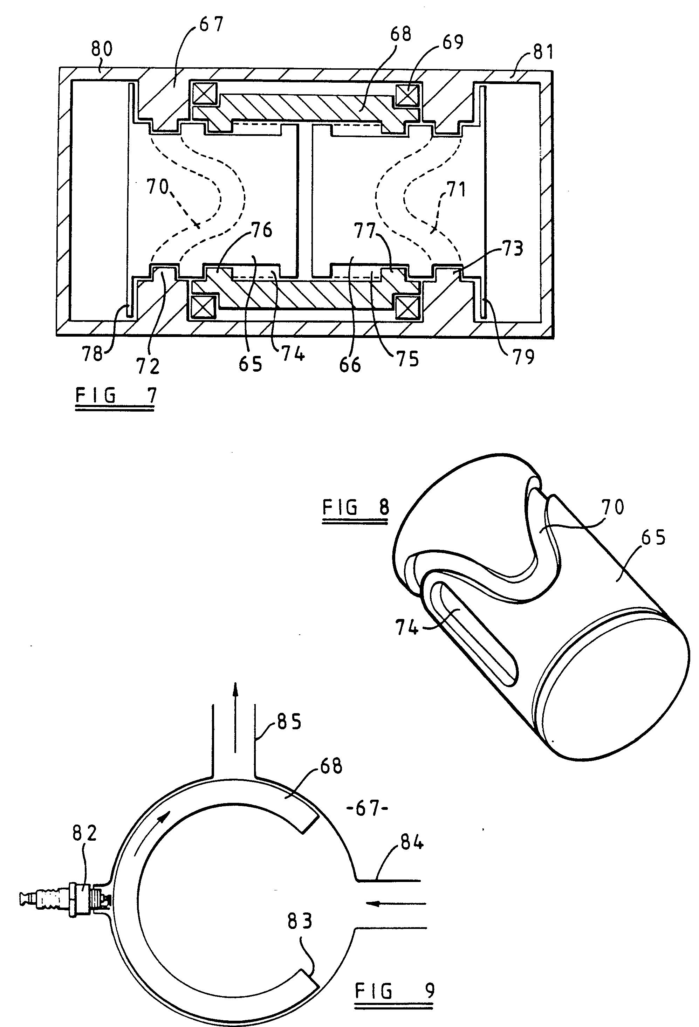

Figure 7 shows diagrammatically a section through a further form of horizontally opposed two-cylinder engine according to the invention. In this arrangement the two pistons 65, 66 reciprocate towards and away from one another in a common cylinder assembly which is formed partly by a fixed cylindrical casing 67 and partly by a central sleeve 68 which is rotatable within the fixed casing 67 on bearings 69.

As in the previously described arrangements, the pistons 65, 66 are formed with peripheral sinusoidal grooves 70, 71 which are engaged by followers 72, 73 projecting inwardly from the fixed portion of the cylinder wall. The pistons are also formed with axially extending slots 74, 75 into which project pins 76, 77 extending inwardly from the inner surface of the sleeve 68. Such arrangement causes the sleeve 68 to rotate with the pistons 65, 66 while at the same time permitting the axial reciprocating movement of the pistons with respect to the sleeve. Figure 8 is a perspective view showing the peripheral groove 70 and axial slot 74 on the piston 65.

The outer extremities of the two pistons are formed with larger diameter flanges 78, 79 which reciprocate in larger diameter portions 80, 81 of the fixed part of the cylinder assembly. (The flange 78 is not shown in Figure 8).

In this arrangement the combustion chamber is within the sleeve 68 and between the opposed heads of the pistons so that as ignition occurs the pistons are forced apart. The flow of gases is controlled by ports in the sleeve 68 according to the compression/ignition cycle required. Figure 9 shows a method of providing four stroke valving for the opposed pistons, the spark plug being indicated at 82. The profiles of the grooves in the pistons are such that the rotating sleeve 68 makes one complete revolution for every two piston reciprocations. An aperture 83 in the sleeve uncovers inlet and exhaust ports 84, 85 in turn. With a larger number of ports the ratio of reciprocations to revolutions could be increased.

For two-stroke operation one piston could control the exhaust port and the other could control the inlet port to provide uniflow scavenging. By having different profile grooves cut in each piston a high degree of control over valve timing can be obtained. The large diameter flanges 78, 79 on the outer ends of the pistons allow them to displace larger volumes than the combustion cylinders, thus providing a supercharging effect.

The specific embodiments of the invention described above have been in the form of internal combustion engines, since this is regarded as a particularly important application of the invention. However, it will be appreciated that the mechanisms employed are equally applicable to other forms of engine, such as steam or gas engines, and are also applicable to pumps and compressors, the appropriate modifications being made. In the latter case, of course, the shaft will be an input shaft, rotation of which results in reciprocation of the piston.

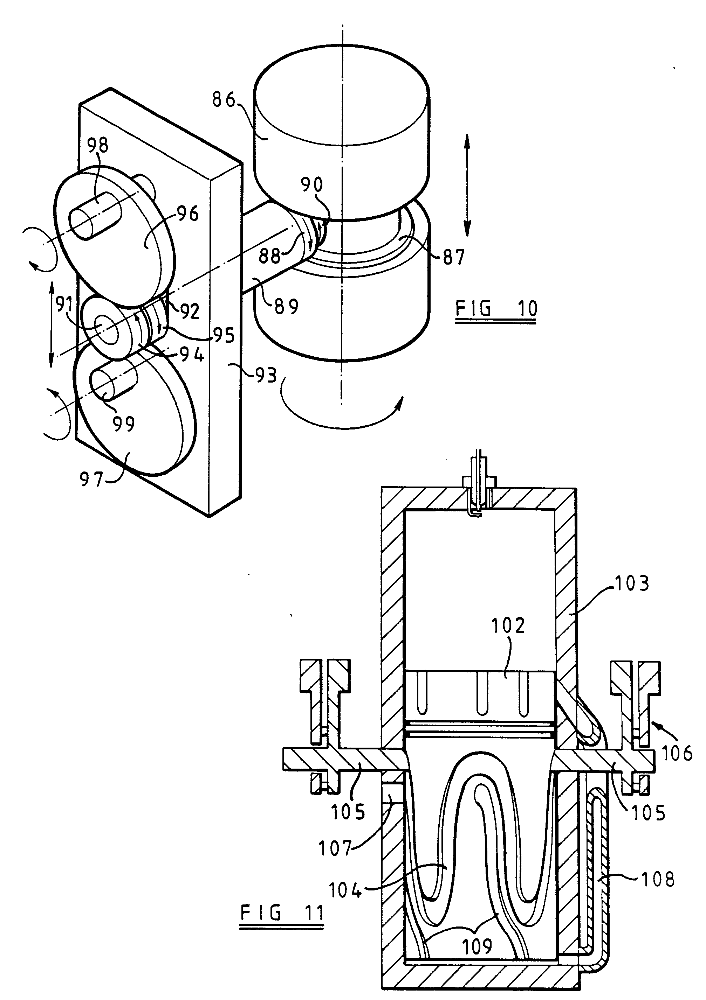

Figure 10 illustrates diagrammatically a different arrangement for generating rotating and reciprocating motion in a piston (or indeed any other device) with all the advantages previously mentioned. Although the arrangement will be described as a means for transmitting rotating and reciprocating motion to a piston, it will be appreciated that the arrangement might equally well be used to provide the power take-off from a piston which is being reciprocated in an engine, such as an internal combustion engine.

Referring to Figure 10, the piston 86 is formed with a central annular groove which lies in a plane at right angles to the longitudinal axis of the piston. The upper edge of the groove is toothed and is in mesh with a pinion 88 mounted on a shaft 89. The lower edge of the groove has a stepped toothed portion 87 which lies on a smaller radius than the upper toothed portion which the pinion 88 engages. The toothed portion 87 is engaged by a further pinion 90 which is mounted on a shaft 91 which extends coaxially through the shaft 88.

The coaxial shafts 89 and 91 are mounted so as to be capable of bodily movement perpendicular to their length and parallel to the direction of reciprocation of the piston 86. This is illustrated diagrammatically in Figure 10 by the outer shaft 89 being arranged to move up and down in a vertical slot 92 in a fixed bearing member 93.

The shafts 91 and 89 carry further gear wheels 94 and 95 respectively which are in mesh with toothed cam members 96 and 97 mounted on shafts 98 and 99 respectively which are rotatable about fixed axes.

Power may be input into the system by drivably rotating any of the shafts 89, 91, 98 or 99. The meshing between the various toothed elements then results in rotation of all of the elements. The pinions 88 and 90 rotate in opposite directions and impart rotation to the piston 86 by virtue of their meshing with the teeth on the upper and lower sides respectively of the groove in the piston. The smaller diameter of the pinion 90 compensates for the fact that the circumferential distance travelled by the inner pinion 90 during each rotation requires to be less than that travelled by the outer pinion 88. Alternatively the difference could be compensated in the profiles of the cams 96, 97.

As the cams 96 and 97 rotate they cause the shaft 89, together with the coaxial shaft 91, to reciprocate up and down in the slot 92. The profiles of the cams 96 and 97 are such that they remain in mesh with the gear wheels 94 and 95 respectively whatever the vertical position of the gear wheels.

As previously mentioned, the same system may be used in reverse as a power take-off from a reciprocating piston in an engine and may, for example, be applied to any of the engine arrangements previously described.

The profiles of the cams may be selected according to the requirements of the system, but they will generally be of such a form as to generate a sinusoidal up and down oscillation in the shafts 89, 91 and hence the piston.

The fact that the arrangement includes counter-rotating shafts makes the installation of balancing masses (for example as described later) simpler.

The use of a flat annular groove in the piston permits the use of a plurality of profile followers, although the number of followers is independent of the number of reciprocations the piston is making per revolution, which is not the case in the previously described arrangements having a profiled groove.

Figure 11 illustrates diagrammatically in section a single cylinder two-stroke engine according to the invention. In this arrangement the piston 102 is reciprocable in a cylinder 103 and is formed with a peripheral groove 104 of sinusoidal profile. The groove 104 is engaged by rotatable followers on the ends of rotatable shafts 105 which project inwardly of the cylinder walls. Each shaft 105 carries a balancing assembly indicated generally at 106 which will be described in greater detail below.

The flow of gases between the ends of the cylinder 103 is effected through an inlet port 107, a transfer passage 108, and an exhaust port (not shown), all controlled by the piston. The piston is formed in its outer surface with channels 109 for the transfer of fuel/air mixture from the inlet port 107 to the pumping end of the cylinder.

The profile of the groove 104 is such as to provide one complete revolution of the piston for each four reciprocating movements of the piston. Power take-off may be by any of the methods previously described and may, for example, be from the shafts 105.

The piston is shown at bottom dead centre with the lower side of the piston being used as a pump cylinder. The channels 109 allow flow of air/fuel mixture into the lower part of the cylinder during the compression stroke. The channels move out of register with the inlet port 107 at top dead centre thereby closing it. Only one transfer passage 108 is shown but in practice several would be preferred. Although spark plug ignition is shown, the engine could also operate under the compression-ignition.

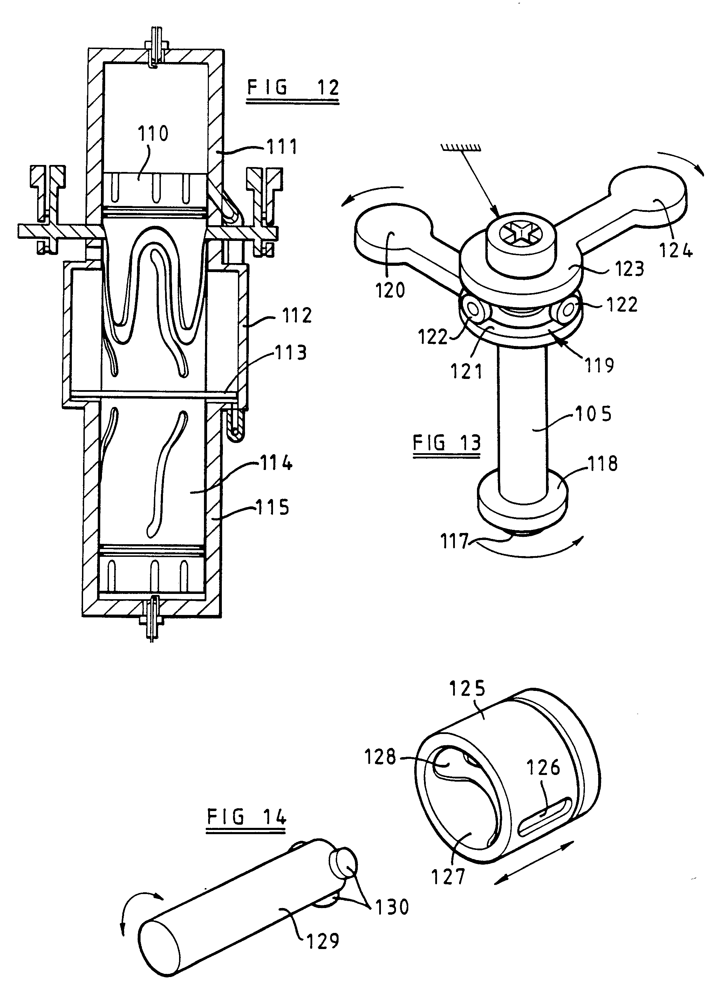

Figure 12 shows a modified version comprising a single cylinder double-acting piston. In this case the upper piston 110 and associate parts operate in similar fashion to the arrangement of Figure 11 and will not therefore be described in detail. However, in this case the lower pumping portion of the cylinder 111 is of increased diameter as indicated at 112 and the lower end of the piston 110 is formed with a large diameter flange 113 to provide a greater swept volume and hence a supercharging effect.

Also there is integral with the piston 110 a second piston 114 reciprocating in a cylinder 115 which is opposed to the cylinder 111 and uses the same pumping portion 112. The second piston 114 is also provided with channels for transferring air/fuel mixture to the pumping portion 112 when the piston 114 is at bottom dead centre.

It will be seen that in this arrangement only the upper piston 110 requires to be provided with the peripheral sinusoidal groove arrangement for effecting rotation of the combined piston as it reciprocates.

Figure 13 illustrates in greater detail the balancing arrangement 106 shown in Figure 11 and also used in the arrangement of Figure 12. As seen in Figure 13 the shaft 105 has at one end a bearing surface 117 which engages in the sinusoidal groove in the piston. Adjacent the bearing surface 117 is a gearwheel 118 which engages a toothed track along the groove in the piston (for example in similar fashion to the arrangement of Figure 5) so that the shaft 105 rotates as the piston reciprocates. Fixedly mounted on the shaft 105 is a circular flange 119 from one side of which extends an eccentric balance mass 120.

The surface 121 of the flange 119 is formed with an annular toothed track and running on the track 121 are four equally spaced bevel gears 122 which are rotatably mounted on a fixed four-armed support, the shaft 105 being rotatable relatively to the support.

Rotatable on the shaft 105 is an annular collar 123 which is also formed with an annular toothed track in engagement with the bevel gears 122. The collar 123 also carries an eccentric balance mass 124.

The four-armed support carrying the bevel gears 122 is fixed against rotation so that as the shaft 105 and flange 119 rotate the bevel gears 122 cause counter-rotation of the collar 123. As a result the eccentric balance masses 120 and 124 are also counter-rotating.

The rolling diameter of the gearwheel 118 is such that it turns through one revolution in one cycle of the sinusoidal profile. This means that the balance masses 120 and 124 will periodically coincide with each other so as to balance the mass of the single reciprocating piston assembly in either of the arrangements of Figures 11 and 12. As previously mentioned, torque may be extracted from the shaft 105 or may be extracted from the engine by any of the method previously described.

Although Figure 13 shows a counter-rotating arrangement to remove unwanted secondary torque generation, adequate results could be obtained by using a single eccentric balancing mass rotating on the shaft. This would be a cheaper alternative since the bevel gear assembly to provide the counter-rotating masses would not be used.

In all of the arrangements previously described the piston is arranged to rotate as it reciprocates and this rotation of the piston is used to drive the output shaft. As previously mentioned, however, arrangements are possible in which the piston does not itself rotate and such an arrangement is illustrated diagrammatically in Figure 14.

In this form of the invention, the piston 125 is formed with an axially extending slot 126 which is engaged by a pin projecting inwardly of the cylinder (not shown) to prevent rotation of the piston within the cylinder. The piston is hollow and the internal wall surface 127 of the hollow piston is formed with a peripheral sinusoidal groove 128. The output shaft 129 extends axially through one closed end wall of the cylinder and is formed at one end with peripherally spaced followers 130 which engage in the groove 128.

The output shaft 129 is restrained against axial movement and as the piston 125 reciprocates the inter-engagement between the followers 130 and the groove 128 causes the output shaft 129 to rotate continuously in one direction. This therefore provides a very direct conversion of the reciprocation of the piston into the required rotation of the output shaft. Opposed pistons may be connected to a common output shaft in corresponding fashion to the opposed piston arrangements previously described.

## Claims

1. Power transmission apparatus including a piston (28) reciprocable within a cylinder (30) and a rotatable shaft (36), the piston and cylinder having relatively movable cooperating formations (32, 34)-such that reciprocation of the piston is accompanied by continuous rotation thereof in one direction about the longitudinal axis of reciprocation, coupling means (37, 39) being provided to transmit the rotation of the piston to the rotatable shaft or vice versa.

2. Apparatus according to Claim 1, wherein the cooperating formations comprise a peripheral guideway (32) on one part and a follower (34) on the other part, the peripheral guideway having generally the form of an alternating wave.

3. Apparatus according to Claim 2, wherein the peripheral guideway (32) is on the piston (28) and the follower (34) is on the cylinder (30).

4. Apparatus according to Claim 2 or Claim 3, wherein the guideway (32) is generally sinusoidal in form whereby reciprocation of the piston (28) is accompanied by rotation thereof at a substantially constant speed.

5. Apparatus according to any of Claims 2 to 4, wherein the guideway is in the form of a groove (32) in the surface of said one part, the follower (34) being located so as to project into the groove and being of such shape and dimensions as to contact both sides of the groove as relative rotation occurs between the piston (28) and cylinder (30).

6. Apparatus according to Claim 5, wherein the follower (34) is rotatable so as to roll along the sides of the groove (32).

7. Apparatus according to Claim 6, wherein the follower comprises two contra-rotating elements (18, 19, Fig. 2) which roll along the opposite sides of the groove (12) respectively.

8. Apparatus according to any of Claims 2 to 6, and in which the guideway (53, Fig, 5) extends around the piston (54), wherein the guideway has a toothed surface (57), the follower being a toothed wheel (61) in mesh with the guideway surface which wheel thereby rotates as the piston rotates.

9. Apparatus according to Claim 8, wherein the follower (61) is coupled to the shaft (62) to transmit the rotation of the piston to the shaft or vice versa.

10. Apparatus according to any of Claims 1 to 9, wherein the shaft (36) extends axially into the cylinder (30) through one end thereof, and the coupling means (37) between the piston (28) and output shaft (36) is such that the shaft rotates with the piston while permitting axial movement of the piston relatively to the shaft.

11. Apparatus according to Claim 10, wherein the coupling means comprise a splined connection.

12. Apparatus according to any of Claims 2 to 11, wherein there are provided a plurality of said followers (34) spaced around the periphery of the piston (28).

13. Apparatus according to any of Claims 1 to 12, and for use as an internal combustion, steam or gas engine, wherein the rotation of the piston (28) effects opening and closing of valve means (41, 43, 45) for controlling the flow of gases into and out of the cylinder.

14. Apparatus according to Claim 13, wherein there is rotatable with the piston a valve sleeve (41) having apertures (43) which open and close ports (45) in the cylinder wall in a sequence according to the required combustion or pumping cycle.

15. Apparatus according to Claim 14, wherein the sleeve (41) is fixed to the piston (28) so as to move axially with the piston as it rotates.

16. Apparatus according to Claim 14, wherein the sleeve (68, Fig. 7) is connected to the piston (65) by a pin-and-slot connection (76, 74) so that the piston may move axially relatively to the valve sleeve (68).

17. Apparatus according to any of Claims 14 to 16, for use as an internal combustion engine working on the two-stroke cycle.

18. Apparatus according to any of Claims 1 to 17, wherein there are provided a plurality of piston and cylinder assemblies (28, 30, 29, 31, Fig. 4), the pistons being coupled to a common input or output shaft (36).

19. Apparatus according to Claim 18, wherein the common shaft (36) extends axially into two opposed, axially aligned cylinders (30, 31).

20. Power transmission apparatus including a piston (125, Fig. 14) reciprocable within a cylinder and an output or input shaft (129) extending longitudinally into the cylinder through one end thereof, coupling means (128, 130) being provided between the piston (125) and shaft (129) such that reciprocation of the piston is accompanied by continuous rotation of the shaft in one direction, means (126) being provided to restrain the piston against rotation relatively to the cylinder about the longitudinal axis of reciprocation.

FIG 1

FIG 2

FIG 3

EP 0 320 171 A1

FIG 4

FIG 5

FIG 6

FIG 7

FIG 8

FIG 9

FIG 10

FIG 11

FIG 12

FIG 13

FIG 14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 915 109 (G. SCHLAUTKÖTTER) * Page 2, lines 6-38; page 3, line 13 - page 4, line 3; figures * | 1-7,10, 11,13, 17,18, 19 | F 16 H 25/12 F 01 B 3/08 |
| A | | 14,16 | |
| X | DE-A-3 038 673 (W. SCHWANT) * Page 6, line 23 - page 7, line 17; figures * | 1-6,10- 15,18, 19 | |
| Y | | 8 | |
| Y | DE-A-3 515 815 (H. SCHMIDT) * Page 4, lines 4-8; figures 3,4 * | 8 | |
| A | | 1,2 | |
| X | WO-A-8 603 546 (R.J. SNYDERS) * Page 7, lines 1-16; page 8, claims 4,6,10; figures * | 1-2,4-6 ,12-13, 17-19 | |
| Y | | 16 | |
| X | WO-A-8 301 088 (P. BEKIAROGLOU) * Page 12, claims 1,2; page 4, last paragraph - page 5, paragraph 3; figures 1-3 * | 20 | TECHNICAL FIELDS SEARCHED (Int. Cl.4) |
| Y | | 16 | F 16 H |
| A | | 1-2,13- 14,17- 19 | B 01 F F 01 L |
| X | DE-C- 822 176 (P.W. WENZEL) * Whole document * | 1,2,13- 14,20 | |
| | --- | -/- | |

The present search report has been drawn up for all claims

| Place of search | Date of completion of the search | Examiner |
|---|---|---|
| THE HAGUE | 14-03-1989 | MENDE H. |

EPO FORM 1503 03.82 (P0401)

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 400 306 (W. HARPHAM et al.)<br>* Whole document *<br>--- | 1-5 | |
| X | GB-A- 431 237 (K. BORS)<br>* Whole document *<br>----- | 20 | |

TECHNICAL FIELDS
SEARCHED (Int. Cl.4)

The present search report has been drawn up for all claims

| Place of search | Date of completion of the search | Examiner |
|---|---|---|
| THE HAGUE | 14-03-1989 | MENDE H. |

EPO FORM 1503 03.82 (P0401)